# EUROPÄISCHE PATENTSCHRIFT

(11) **EP 1 478 302 B1**
(45) Veröffentlichungstag und Bekanntmachung des Hinweises auf die Patenterteilung: **22.12.2010**
(21) Anmeldenummer: 02806876.5
(22) Anmeldetag: 19.11.2002
(51) Int. Cl.: A61C 17/34

(54) **BÜRSTENKOPF FÜR EINE ZAHNBÜRSTE**
BRUSH HEAD FOR A TOOTHBRUSH
TETE DE BROSSE A DENTS

(30) Priorität: 27.02.2002 DE 10208528
(43) Veröffentlichungstag der Anmeldung: 24.11.2004
(73) Patentinhaber: Braun GmbH, 61476 Kronberg (DE)
(72) Erfinder: KRESSNER, Gerhard, 63674 Altenstadt (DE); STOLPER, Michael, 65760 Eschborn (DE)
(86) Internationale Anmeldenummer: PCT/EP2002/012935
(87) Internationale Veröffentlichungsnummer: WO 2003/071979

(56) Entgegenhaltungen:
- EP-A- 1 093 770
- WO-A-01/43586
- DE-U- 29 600 236
- US-A- 5 435 032
- US-A- 5 732 433
- US-A- 5 836 030

## Beschreibung

Die vorliegende Erfindung betrifft einen Bürstenkopf für eine Zahnbürste, die ein Handteil mit einem Antrieb für den Bürstenkopf aufweist, mit einem ein Borstenfeld tragenden, insbesondere scheiben- bzw. tellerförmigen Borstenträger, der an einem Bürstenkopfträger beweglich gelagert ist und Verbindungsmittel zur Ankupplung an den handteilseitigen Antrieb der Zahnbürste aufweist, wobei der Borstenträger in mehrere zueinander bewegliche Borstenträgersegmente unterteilt ist, sowie mit Antriebsmitteln, die die Stellung der Borstenträgersegmente relativ zueinander in Abhängigkeit der Stellung des gesamten Borstenträgers verändern.

Bei elektrischen Zahnbürsten wird in jüngerer Zeit verstärkt der Reinigung der Zahnzwischenräume und der Zahnfleischtaschen Bedeutung beigemessen. Es wird versucht, mit den Borsten in die Zahnzwischenräume einzudringen, um dort Plaque zu entfernen. Dem sind jedoch durch die Länge und die feste Fixierung der Borsten gewisse Grenzen gesetzt. Aus der EP 0 835 081 B1 ist ein Bürstenteil für eine elektrische Zahnbürste bekannt, dass einen um eine Rotationsachse senkrecht zur Bürstenlängsrichtung drehbaren Borstenträger aufweist, der rotatorisch oszillierend antreibbar ist. Auf dem Borstenträger sind in mehreren Ringen Borstenbüschel angeordnet, wobei auf dem äußersten Borstenbüschelring in diametral gegenüberliegenden Segmenten Borstenbüschel vorgesehen sind, die die restlichen Borstenbüschel überragen und eine erhöhte Steifigkeit besitzen. Diese sogenannten Powertips sollen in die Zahnzwischenräume eindringen und diese besonders gründlich reinigen. Diese vorbekannte Anordnung ist jedoch noch weiter verbesserungsfähig. Durch die Oszillation des Borstenträgers werden die Powertips in die Zwischenräume ein- und wieder ausgewischt, wobei sie durch die dabei entstehende Bewegungskurve den jeweiligen Zwischenraum nicht optimal erreichen, da erst über das Zahnfleisch gewischt werden muss, um in den Zahnzwischenraum eindringen zu können. Zudem können die Powertips nur soweit in den Zahnzwischenraum eindringen, wie sie über die restlichen Borsten überstehen.

Aus der US 5,732,433 ist ein Bürstenkopf einer elektrischen Zahnbürste bekannt, bei dem neben dem Hauptborstenträger, der um eine zur Bürstenlängsrichtung senkrechte Rotationsachse rotatorisch oszillierend angetrieben wird und ein etwa kreisrundes Borstenfeld trägt, ein weiterer Borstenträger mit Zusatzborsten vorgesehen ist. Dieser zusätzliche Borstenträger ist von dem Hauptborstenträger separat ausgebildet und sitzt unmittelbar auf einer Antriebswelle, die sich im Inneren des Bürstenkopfträgers erstreckt und auch den Hauptborstenträger antreibt. Die Zusatzborsten werden rotatorisch oszillierend um die Antriebsachse, d.h. um die Längsachse der Bürste angetrieben und sollen die Zahnzwischenräume auswischen. Abgesehen davon, dass dieser separat Antrieb des Zusatzborstenfeldes relativ aufwendig ist, besteht auch hier das zuvor genannte Problem, dass die verlängerten Zusatzborsten nicht tief genug in die Zahnzwischenräume eindringen können.

Eine Verbesserung kann hier erreicht werden, wenn die Powertips stoßend in den Zwischenraum eindringen können. Die EP 1 093 770 A2 schlägt einen gattungsgemäßen Bürstenkopf vor, bei der der rotatorisch oszillierend antreibbare, im wesentlichen scheibenförmige Borstenträger in mehrere Borstenträgersegmente unterteilt ist, die zueinander beweglich sind. Die Powertips sind auf einer Wippe angeordnet, die um eine quer zur Drehachse des Borstenträgers verlaufende Wippachse wippbar gelagert ist und gegenüberliegende Segmente des Borstenträgers bildet, so dass durch Auf- und Niederwippen entsprechende Stoß- bzw. Stocherbewegungen der Powertips erzielt werden können. Die Wippbewegungen werden dabei durch einen Kurbeltrieb erzeugt, der auf der Antriebswelle sitzt, die im Inneren des Bürstenrohrs zum rotatorisch oszillierenden Antrieb des Borstenträgers vorgesehen ist. Dementsprechend ist die Wippbewegung an die rotatorische Oszillation des Borstenträgers gekoppelt, d.h. die wippenförmigen Borstenträgersegmente werden in Abhängigkeit der Drehstellung des gesamten Borstenträgers bewegt. Durch die Anordnung der Powertips auf einer Wippe dringen jedoch nur immer die auf einer Seite angeordneten Powertips in den Zahnzwischenraum ein, da die gegenüberliegenden Powertips aufgrund des Prinzips der Wippe zurückgezogen werden. Ferner ist der Antrieb, der die Wippbewegung bewirkt, relativ aufwendig und erfordert darüber hinaus einen Borstenträgerantrieb eines speziellen Typs, nämlich eine um ihre Längsachse rotierende oder oszillierende Antriebswelle.

Der vorliegenden Erfindung liegt daher die Aufgabe zugrunde, einen verbesserten Bürstenkopf der genannten Art zu schaffen, der Nachteile des Standes der Technik vermeidet und letzteren in vorteilhafter Weise weiterbildet. Vorzugsweise soll mit einfachen Mitteln eine zusätzliche Bewegung der Borstenträgersegmente erreicht werden, die eine verbesserte Reinigung der Zahnzwischenräume erlaubt.

Erfindungsgemäß wird diese Aufgabe durch einen Bürstenkopf gemäß Patentanspruch 1 gelöst. Bevorzugte Ausgestaltungen der Erfindung sind Gegenstand der Unteransprüche.

Erfindungsgemäß umfassen also die Antriebsmittel, die eine Bewegung der Borstenträgersegmente relativ zueinander bewirken, eine Kurvensteuerfläche sowie ein damit zusammenwirkendes Eingriffselement, die an dem Bürstenkopfträger und zumindest einem Borstenträgersegment vorgesehen sind, um dieses zumindest eine Borstenträgersegment bei Bewegung des Borstenträgers um dessen Bewegungsachse entsprechend zu bewegen. Es ist also kein aufwendiger, von der Antriebswelle abgehender Kurbelantrieb notwendig, um die gewünschte Borstenträgersegmentbewegung zu erzielen. Die Grundbewegung des gesamten Borstenträgers relativ zu dem Bürstenkopfträger wird über eine Nockenfläche zum zusätzlichen Antrieb einzelner Borstenträgersegmente genutzt, so dass diese einzelnen Borstenträgersegmente eine der Grundbewegung des Borstenträgers überlagerte Zusatzbewegung ausführen. Auf Kurbeistifte mit angeschweißten Hubstößeln kann verzichtet werden.

Die Grundbewegung des Borstenträgers kann grundsätzlich verschieden ausgebildet sein. Insbesondere jedoch wird der Borstenträger um eine Drehachse im wesentlichen senkrecht zur Längsrichtung des Bürstenkopfes rotatorisch oszillierend angetrieben. Die Kurvensteuerfläche erstreckt sich auf einem Bogen um die Drehachse des Borstenträgers herum, so dass das zumindest eine bewegliche Borstenträgersegment entsprechend der Drehbewegung des Borstenträgers angetrieben wird.

Die Kurvensteuerfläche ist an dem Borstenträgersegment selbst ausgebildet bzw. angeordnet, während das damit zusammenwirkende Eingriffselement ortsfest am Bürstenkopfträger vorgesehen ist. In vorteilhafter Weiterbildung der Erfindung jedoch ist die Kurvensteuerfläche ortsfest am Bürstenkopfträger vorgesehen, während das damit zusammenwirkende Eingriffselement an dem zu bewegenden Borstenträgersegment angeordnet ist. Die Kurvensteuerfläche sowie das damit zusammenwirkenden Eingriffselement können unmittelbar von Oberflächen des Bürstenkopfträgers bzw. des Jeweiligen Borstenträgersegments gebildet sein. Die Kurvensteuerfläche und/oder das damit zusammenwirkende Eingriffselement können auch als separate Elemente ausgebildet werden, die an dem jeweiligen Borstenträgersegment bzw. dem Bürstenkopfträger befestigt sind. Sie können hierdurch besonders verschleißfest und/oder austauschbar ausgebildet werden.

Der Borstenträger besitzt zumindest ein starres Borstenträgersegment, das nur die Drehbewegung bzw. die Grundbewegung ausführt, sowie zumindest ein bewegliches Borstenträgersegment, das die Grundbewegung und zusätzlich eine Stocherbewegung ausführt, In Weiterbildung der Erfindung können auch mehrere Borstenträgersegmente, vorzugsweise ein Paar auf dem Borstenträger diametral gegenüberliegende Borstenträgersegmente beweglich gelagert sein und in Abhängigkeit der Drehstellung des Borstenträgers von der Kurvensteuerung angetrieben werden. Die entsprechende Kurvensteuerfläche kann hierzu mehrere Aschnitte aufweisen, von denen jeweils ein Abschnitt einem der angetriebenen Borstenträgersegmente zugeordnet ist.

Die Kurvensteuerung kann verschiedene Ausführungen besitzen. Nach einer bevorzugten Ausgestaltung der Erfindung ist die Kurvensteuerung als Zwangssteuerung ausgebildet derart, dass die hiervon angetriebenen Borstenträgersegmente sowohl in die eine Richtung wie auch in die andere Richtung zwangsgesteuert sind. Die entsprechende Kurvensteuerfläche und das damit zusammenwirkende Eingriffselement stehen stets im Eingriff und sind in entgegengesetzten Bewegungsrichtungen wirksam. Das mit der Kurvensteuerfläche zusammenwirkende Eingriffselement kann von der Kurvensteuerfläche nicht abgehoben werden und folgt dieser zwangsweise. Eine solche Zwangssteuerung kann beispielsweise dadurch verwirklicht sein, dass das Eingriffselement in einer Kurvensteuernut läuft, also quasi zwei zueinander parallele Kurvensteuerflächen vorgesehen sind, zwischen denen das Eingriffselement läuft. Eine Zwangssteuerung kann auch dadurch vorgesehen werden, dass das der Kurvensteuerfläche zugeordnete Eingriffselement eine gekrümmte Eingriffsfläche bildet, die gleichsinnig und mit etwa gleichem Krümmungsradius wie die Kurvensteuerfläche gekrümmt ist, so dass eine konkave Fläche passgenau auf einer konvexen Fläche sitzt. Wenn das entsprechend Borstenträgersegment um eine zur Krümmungsachse der beiden Eingriffsflächen parallele Achse beweglich gelagert ist, ergibt sich bei einer Bewegung des Borstenträgersegments quer zu seiner beweglichen Lagerachse eine zwangsweise definierte Schwenkstellung.

In alternativer Weiterbildung der Erfindung kann die Kurvensteuerung auch nicht zwangsgesteuert ausgebildet sein. Das jeweilige Borstenträgersegment kann derart gelagert sein, dass die Kurvensteuerfläche und damit zusammenwirkendes Eingriffselement voneinander abhebbar sind, so dass die Kurvensteuerung außer Eingriff gelangen kann. Dies wird in der Praxis dennoch nicht geschehen, da die beim Putzen entstehenden Reaktionskräfte, die auf die Borsten wirken, das Borstenträgersegment nach unten und damit Kurvensteuerfläche und Eingriffselement aufeinander drücken. Dementsprechend braucht der Nockenantrieb nicht in beide Richtungen wirksam ausgebildet werden, es reicht, wenn er nur in eine Richtung die Bewegung des Borstenträgersegments bewirkt. Gegebenenfalls kann auch eine Vorspann- bzw. Federeinrichtung vorgesehen sein, die einem Abheben des Eingriffselements von der Kurvensteuerfläche entgegenwirkt.

In Weiterbildung der Erfindung ist die Kurvensteuerung derart ausgebildet, dass die von der Kurvensteuerung angetriebenen Borstenträgersegmente Stocherbewegungen im wesentlichen in Borstenlängsrichtung ausführen. Der Borstenträger wird also als Ganzes um eine Drehachse im wesentlichen parallel zur Hauptrichtung des Borstenfelds gedreht. Zusätzlich wird einem oder mehreren Borstenfeldsegmenten eine Stocherbewegung überlagert.

In Weiterbildung der Erfindung ist die Kurvensteuerung derart ausgebildet, dass ein maximaler Hub, d.h. also die maximale Stocherbewegung der beweglichen Borstenträgersegmente dann auftritt, wenn der Borstenträger in seiner mittleren, neutralen Stellung ist, aus der er oszillierend in entgegengesetzte Richtungen antreibbar ist. Jedes Mal wenn der Borstenträger sozusagen seinen Nulldurchgang hat, werden die von der Kurvensteuerung angetriebene Borstenträgersegmente maximal angehoben. In den maximal ausgelenkten Stellungen des Borstenträgers hingegen nehmen die beweglichen Borstenträgersegmente eine minimale Hubstellung bzw. eine zurückgezogene Stellung ein.

In Abhängigkeit der Ausbildung des Borstenfeldes und der Anordnung der Powertips kann auch vorgesehen sein, daß in den maximal ausgelenkten Stellungen des Borstenträgers die beweglichen Borstenträgersegmente eine maximale Hubstellung einnehmen und im Nulldurchgang des Borstenträgers die beweglichen Borstenträgersegmente ihre zurückgezogene, minimale Hubstellung einnehmen.

Wenn mehrere Borstenträgersegmente von der Kurvensteuerung angetrieben werden, ist vorzugsweise vorgesehen, dass die Borstenträgersegmente im gleichen Takt angehoben bzw. abgesenkt werden, d.h. zusammen angehoben und zusammen abgesenkt werden. Dies ist genau das Gegenteil dessen, was die EP 1 093 770 vorschlägt. Die darin beschriebene Wippe bewirkt bei einem stochernden Hub der auf einer Seite angeordneten Powertips gleichzeitig ein Zurückziehen der auf der anderen Seite angeordneten Powertips. Ein gleichzeitiges Anheben kann nicht erreicht werden.

Die beweglichen, von der Kurvensteuerung angetriebene Borstenträgersegmente können an dem unbeweglichen Teil des Borstenträgers bzw. einer Borstenträgerbasis in verschiedener Art und Weise gelagert sein. Es kann vorgesehen sein, dass die beweglichen Borstenträgersegmente translatorisch beweglich, insbesondere in Richtung der Drehachse des Borstenträgers verschieblich gelagert sind. Hierdurch kann eine Stocherbewegung exakt parallel zur Drehrichtung des Borstenträgers erreicht werden. In Weiterbildung der Erfindung jedoch ist vorzugsweise eine Schwenklagerung der beweglichen Borstenträgersegmente vorgesehen, insbesondere um einen zur Drehachse des Borstenträgers quer verlaufende Schwenkachse. Durch die Anordnung der Schwenkachse kann neben der Ausbildung der Kurvensteuerfläche die Höhe und die Bahnkurve der Bewegung des jeweiligen Bürstenträgersegments bestimmt werden, die durch die Kurvensteuerung erzeugt wird.

Gemäß einer ersten bevorzugten Ausführung der Erfindung sitzen die beweglichen Borstenträgersegmente auf einer radial verlaufenden Schwenkachse derart, dass auf dem Borstenträgersegment sitzende Borsten in einer zur Umfangsrichtung des Borstenträgers tangentialen Ebene schwenkend. Die auf dem beweglichen Borstenträgersegment sitzenden Borsten erfahren also durch die Kurvensteuerung eine Wedelbewegung in Umfangsrichtung. Dabei stochern die von der Schwenkachse beabstandet angeordneten Borstenbüschel in ihrer Längsrichtung.

Gemäß einer zweiten bevorzugten Ausführung der Erfindung sind die beweglichen Borstenträgersegmente jeweils um eine Querachse schwenkbar, die sich quer zur Drehachse des Borstenträgers erstreckt und in der vom Borstenträger definierten Ebene liegt, derart, dass auf dem jeweils beweglichen Borstenträgersegment sitzende Borsten in einer zur Drehachse des Borstenträgers radialen Ebene wippen. Bei diametral gegenüberliegenden beweglichen Borstenträgersegmenten schwenken also die darauf angeordneten Borsten aufeinander zu, wobei die von der Schwenkachse beabstandeten Borsten eine Hubbewegung erfahren. Grundsätzlich können die Borstenträgersegmente um separate, vorzugsweise parallele Achsen geschwenkt werden. Es ist auch möglich, die Borstenträgersegmente auf einer gemeinsamen Schwenkachse zu lagern.

Die beweglichen Borstenträgersegmente tragen zweckmäßigerweise Borsten eines besonderen Typs. Insbesondere überragen die auf den beweglichen Borstenträgersegmenten angeordneten Borsten die auf dem festen Borstenträgersegment angeordneten Borsten in Borstenlängsrichtung. Alternativ oder zusätzlich können die in Längsrichtung überstehenden Borsten eine größere Steifigkeit besitzen als die restlichen Borsten. Insbesondere bilden die auf den beweglichen Borstenträgersegmenten angeordneten Borstenbüschel sogenannte Powertips.

Die beweglichen Borstenträgersegmente liegen vorzugsweise in einem radial äußeren Bereich des Borstenträgers, insbesondere bilden sie ein Segment des radial außen liegenden Borstenträgerrandes. In einem radial außen liegenden Bereich des entsprechenden Bürstenträgersegments angeordnete Borsten können länger und/oder steifer als Borsten, die in einem radial innen liegenden Bereich angeordnet sind, ausgebildet sein. Die radial außen liegenden Borsten können auch spezielle Eigenschaften wie z.B. eine Verschleißindikator-Funktion erfüllen.

Weitere Ziele, Vorteile, Merkmale und Anwendungsmöglichkeiten der vorliegenden Erfindung ergeben sich aus der nachfolgenden Beschreibung bevorzugter Ausführungsbeispiele anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehungen. In den Zeichnungen zeigen:
- Figur 1: eine perspektivische Ansicht eines Bürstenkopfs einer elektrischen Zahnbür- ste mit einem rotatorisch oszillierend antreibbaren, scheibenförmigen Bor- stenträger, der zwei beweglich gelagerte, um Querachsen schwenkbare Bor- stenträgersegmente aufweist, nach einer ersten bevorzugten Ausführung der Erfindung,
- Figur 2: eine perspektivische Ansicht des Bürstenkopfes aus Figur 1 aus einer Blick- richtung von schräg unten, die eine Kurvensteuerung der beweglich gelager- ten Borstenträgersegment zeigt,
- Figur 3: eine Schnittansicht durch einen Borstenträger mit beweglich gelagerten Bor- stenträgersegmenten nach einer weiteren Ausführung der Erfindung, bei der die beweglichen Borstenträgersegmente um eine gemeinsame Querachse schwenkbar gelagert sind,
- Figur 4: eine perspektivische Ansicht eines Bürstenkopfes einer elektrischen Zahnbür- ste nach einer weiteren bevorzugten Ausführung der Erfindung, bei der der rotatorisch oszillierend antreibbare Borstenträger zwei um eine radiale Achse schwenkbar gelagerte Borstenträgersegmente aufweist, wobei die Ansicht ei- ne Kurvensteuerung der beweglich gelagerten Borstensegmente zeigt,
- Figur 5: eine Draufsicht auf den Bürstenkopf aus Figur 4, die die Anordnung der be- weglichen Borstenträgersegmente zeigt,
- Figur 6: eine perspektivische Ansicht des Bürstenkopfes aus den beiden vorherge- henden Figuren, die ein Bürstenrohr und eine z.T. vom Bürstenrohr gebildete Kurvensteuerung des beweglich gelagerten Borstenträgersegments zeigt, und
- Figur 7: eine Stirnansicht des Bürstenkopfes aus den vorhergehenden Figuren 4 bis 6, die die beweglich gelagerten Borstenträgersegmente in ihrer unausgelenkten, neutralen Stellung zeigt.

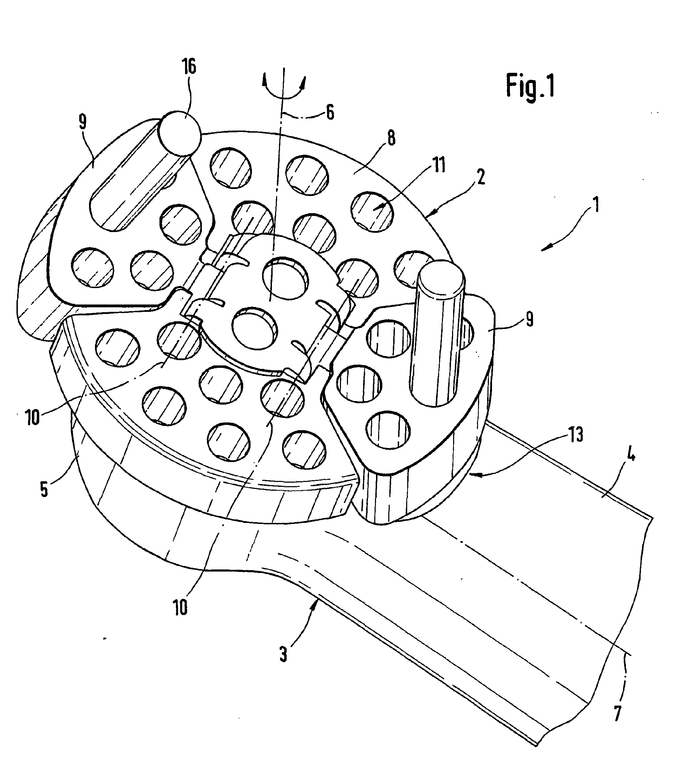

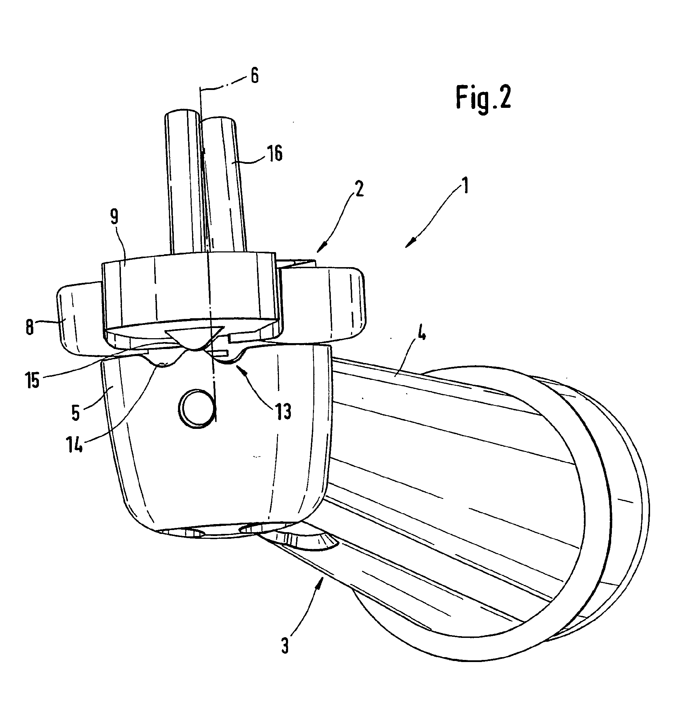

Der in den Figuren 1 und 2 gezeigte Bürstenkopf 1 besitzt einen im wesentlichen scheiben- bzw. tellerförmigen Borstenträger 2, der an einem Bürstenkopfträger 3 gelagert ist. Der Bürstenkopfträger 3 ist als Bürstenrohr 4 ausgebildet, das im Bereich des Borstenträgers 2 einen Borstenträgeraufnahmeabschnitt 5 bildet.

Der Borstenträger 2 ist um eine Drehachse 6, die sich im wesentlichen senkrecht zu der von dem Borstenträger 2 definierten Ebene sowie im wesentlichen senkrecht zur Längsrichtung des Bürstenkopfs 1 erstreckt, drehbar gelagert und rotatorisch oszillierend antreibbar. Hierzu ist im Inneren des Bürstenrohrs 4 ein Antriebselement 7 vorgesehen, das an einen Antrieb eines nicht näher dargestellten Handteils einer Zahnbürste ankuppelbar ist, wenn der Bürstenkopf 1 auf den Zahnbürstenhandteil gesteckt wird, und über eine nicht näher dargestellte Getriebestufe mit dem Borstenträger 2 verbunden ist.

Der Borstenträger 2 kann aus der in Figur 1 gezeigten neutralen Grundstellung in beide Drehrichtungen gedreht werden. Die Oszillation kann beispielsweise weniger als ± 45°, insbesondere etwa ± 35° betragen.

Wie Figur 1 zeigt, umfasst der Borstenträger 2 ein starres Borstenträgersegment 8 sowie zwei hierzu relativ bewegliche Borstenträgersegmente 9, die etwa - grob gesprochen - keilförmige Kontur besitzen und das starre Borstenträgersegment 8 zu einer etwa kreisförmigen Scheibe ergänzen.

Die beiden beweglichen Borstenträgersegmente 9 liegen einander gegenüber und in der in Figur 1 gezeigten unausgelenkten Stellung des Borstenträgers 2 etwa auf der Längsachse des Bürstenkopfs 1. Die beiden Borstenträgersegmente 9 sind jeweils um eine Querachse 10 schwenkbar gelagert, die sich in der von dem Borstenträger 2 definierten Ebene sowie quer zur Drehachse 6 und quer zur Längsrichtung des Bürstenkopfs 1 erstreckt. Die beiden zueinander parallelen Querachsen 10 liegen zur Mitte des Borstenträgers 2 hin, sind in der gezeichneten Ausführung jedoch von der Drehachse 6 leicht beabstandet.

Die beiden beweglichen Borstenträgersegmente 9 liegen in einer unausgelenkten Stellung im wesentlichen in der von dem starren Borstenträgersegment 8 definierten Ebene. Sie können nach oben hin, d.h. zu der das Borstenfeld 11 tragenden Seite hin angehoben werden bzw. um die jeweilige Querachse 10 geschwenkt werden, so dass die auf dem jeweiligen Borstenträgersegment 9 angeordneten Borstenbüschel 12 eine Stocherbewegung ausführen. Es versteht sich, dass die Borstenträgersegmente 9 ebenso wie das starre Borstenträgersegment 8 die Drehbewegung des Borstenträgers 2 um die Drehachse 6 mitmachen.

Der Antrieb der beiden beweglichen Borstenträgersegmente 9 erfolgt in Abhängigkeit der Drehstellung des Borstenträgers 2 relativ zu dem Bürstenkopfträger 3. Wie Figur 2 zeigt, ist eine Kurvensteuerung 13 vorgesehen, die die beweglichen Borstenträgersegmente 9 bei entsprechender Drehbewegung des Borstenträgers 2 um die Drehachse 6 anhebt und absenkt. Die Kurvensteuerung 13 umfasst eine Kurvensteuerfläche 14, die an dem Bürstenkopfträger 3 vorgesehen ist, und zwar in einem unter dem Borstenträger 2 liegenden Abschnitt des Bürstenkopfträgers 3. Wie die Figuren 1 und 2 zeigen, umfasst die Kurvensteuerfläche 14 dabei zwei Abschnitte, die jeweils unter einem der beiden beweglichen Borstenträgersegmente 9 liegen. Der in Figur 2 gezeigte Abschnitt der Kurvensteuerfläche 14 ist in dem Borstenträgeraufnahmeabschnitt 5 des Bürstenkopfträgers 3 ausgebildet, der stirnseitig am Ende des Bürstenkopfträgers 3 liegt. Der zweite Abschnitt der Kurvensteuerfläche 14 ist ebenfalls an dem Borstenträgeraufnahmeabschnitt 5 ausgebildet, jedoch an dessen dem Bürstenrohr 4 angrenzenden Teil.

Die Kurvensteuerfläche 14 erstreckt sich in einem Bogen um die Drehachse 6 herum. Sie liegt im Bereich der Längssymmetrieebene des Bürstenrohrs. Insbesondere ist die Kurvensteuerfläche 14, wie Figur 2 zeigt, symmetrisch zur die Drehachse 6 enthaltenden Längssymmetrieebene des Bürstenkopfs ausgebildet. Sie umfasst einen mittig angeordneten Hökker sowie zwei sich rechts und links anschließende Senken (vgl. Figur 2).

Mit der Kurvensteuerfläche 14 wirkt ein Eingriffselement 15 zusammen, das an dem beweglichen Borstenträgersegment 9 angeordnet ist, und zwar insbesondere auf dessen dem Bürstenkopfträger 3 zugewandten Seite. Wie Figur 2 zeigt, kann das Eingriffselement 15 eine nach unten vorspringende Eingriffsnase sein, die auf der Kurvensteuerfläche 14 abgleitet und in ihrer Kontur etwa den beiden Senken der Kurvensteuerfläche 14 entspricht.

Bei Drehung des Borstenträgers 2 um die Drehachse 6 gleiten die Eingriffselemente 15 an den beiden Bürstenträgersegmenten 9 auf der jeweils zugeordneten Kurvensteuerfläche 14 am Bürstenkopfträger 3 ab. Hierdurch werden die radial außen liegenden Ränder der Borstenträgersegmente 9 angehoben bzw. abgesenkt, d.h. das jeweilige Borstenträgersegment 9 schwenkt um seine Schwenkachse 10. Die Kurvensteuerfläche 14 ist dabei derart ausgebildet, dass die maximale Hubstellung der Borstenträgersegmente 9 jeweils dann erreicht wird, wenn der Borstenträger 2 seinen Nulldurchgang hat, d.h. die in den Figuren 1 und 2 gezeigte unausgelenkte Stellung durchfährt. Wenn der Borstenträger 2 bei seiner rotatorisch oszillierenden Bewegung seine maximal ausgelenkten Stellungen erreicht, fahren die Eingriffselemente 15 in die Senken der Kurvensteuerfläche 14, so dass die Borstenträgersegmente 9 in ihrer abgesenkten Stellung sind, in der sie etwa in der Ebene des starren Borstenträgersegments 8 liegen.

Es kann eine nicht näher dargestellte Vorspanneinrichtung vorgesehen sein, die die Kurvensteuerung 13 in ihre Eingriffsstellung drückt. Beispielsweise kann eine Federeinrichtung die beiden Borstenträgersegmente 9 nach unten gegen den Bürstenkopfträger 3 drücken, so dass die Eingriffselemente 15 auf der Kurvensteuerfläche 14 ruhen. Grundsätzlich kann auf eine solche Vorspanneinrichtung jedoch auch verzichtet werden. Die Borstenträgersegmente 9 werden durch die Reaktionskräfte beim Putzen gegen die Kurvensteuerfläche 14 gedrückt.

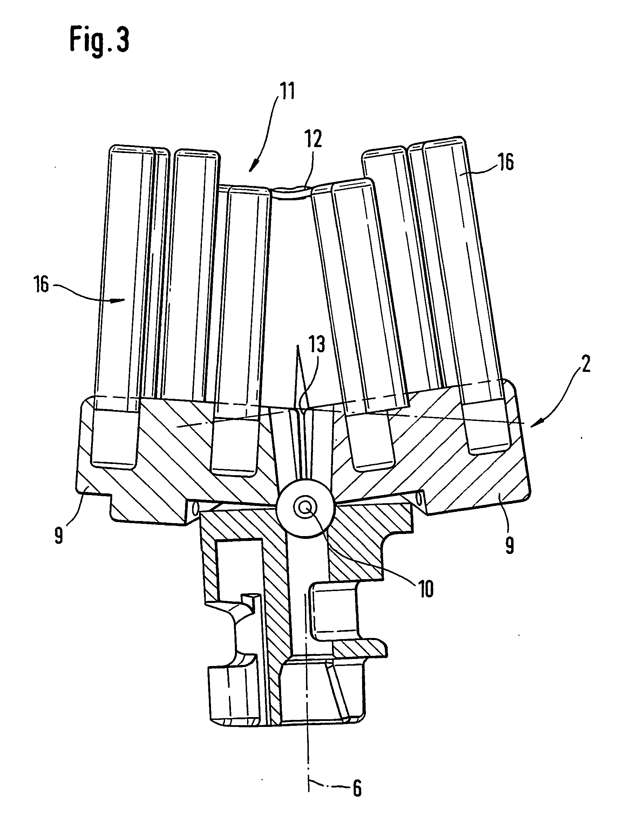

Während die beiden Borstenträgersegmente 9 gemäß den Figuren 1 und 2 um separate Querachsen 10 schwenken können, kann auch vorgesehen sein, dass die beiden beweglichen Borstenträgersegmente 9 um eine gemeinsame Querachse 10 schwenkbar gelagert sind, wie dies Figur 3 zeigt. Der in Figur 3 gezeigte Borstenträger entspricht ansonsten der zuvor beschriebenen Ausführung. Sie zeigt, dass auf den beweglichen Borstenträgersegmenten 9 vorzugsweise sogenannte Powertips sitzen. Die radial außen liegenden Borstenbüschel 16, die auf einem äußeren Ring von Borstenbüscheln angeordnet sind, überragen in Borstenlängsrichtung die radial weiter innen liegenden Borstenbüschel 17 sowie die auf dem starren Borstenträgersegment 8 angeordenten Borstenbüschel, so dass sie besser in Zahnzwischenräume eindringen können. Zudem können die radial außen liegenden Borstenbüschel 16 eine größere Steifigkeit aufweisen. Auch dies unterstützt das Eindringen in die Zahnzwischenräume.

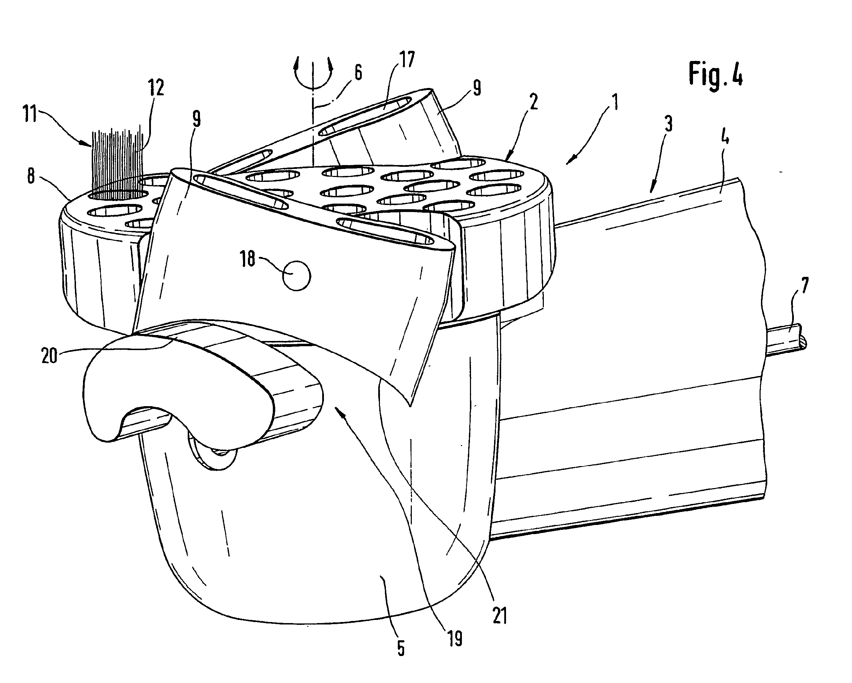

Der in den Figuren 4 bis 7 gezeigte Bürstenkopf 1 gemäß einer weiteren bevorzugten Ausführung der Erfindung umfasst ebenfalls einen im wesentlichen scheiben- bzw. tellerförmigen Borstenträger 2, der an einem länglichen Bürstenkopfträger 3 drehbar gelagert ist. Der Bürstenkopfträger 3 umfasst wie bei der zuvor beschriebenen Ausführung ein Bürstenrohr 4 sowie einen Borstenträgeraufnahmeabschnitt 5, der den Borstenträger 2 aufnimmt bzw. drehbar lagert. Der Borstenträger 2 ist in der zuvor beschriebenen Weise rotatorisch oszillierend um die senkrecht zur Borstenträgerebene und senkrecht zur Längsachse des Bürstenkopfs 1 angeordnete Drehachse 6 antreibbar. In der zuvor beschriebenen Weise kann hierzu im Inneren des Bürstenkopfträgers 3 ein entsprechendes Antriebselement und gegebenenfalls eine Getriebestufe angeordnet sein.

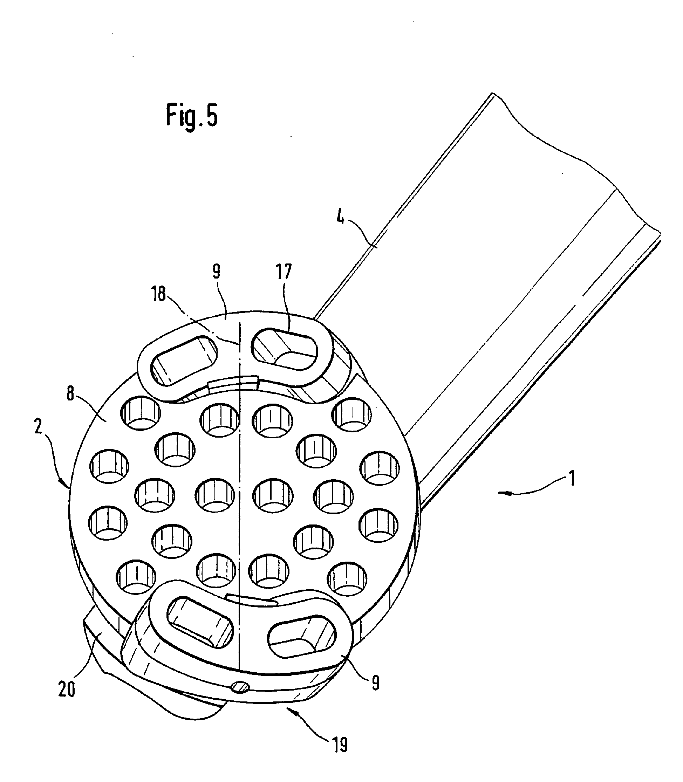

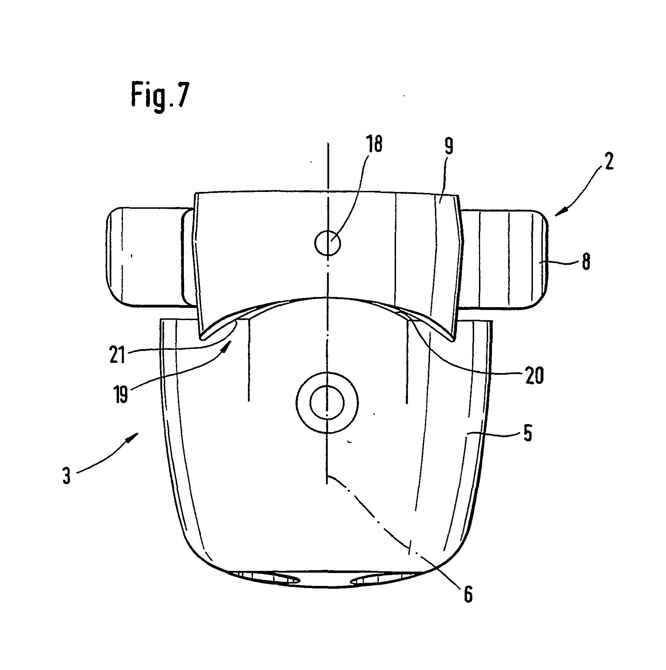

Der Borstenträger 2 besteht ebenfalls aus einem starren Borstenträgersegment 8 und zwei diametral gegenüberliegenden beweglich gelagerten Borstenträgersegmenten 9, die das starre Borstenträgersegment 8 zu einer im wesentlichen kreisrunden Scheibe ergänzen. Wie Figur 5 zeigt, sind die beweglichen Borstenträgersegmente 9 am äußeren Rand des Borstenträgers 2 angeordnet. Die Borstenträgersegmente 9 besitzen die Kontur etwa eines Kreisringabschnitts, der einen Teil des Randabschnitts des Borstenträgers 2 bildet. In der nicht ausgelenkten Stellung des Borstenträgers 2, die in Figur 7 gezeigt ist, liegen die beweglichen Borstenträgersegmente 9 etwa auf der Längsachse des Bürstenkopfs 1, die im wesentlichen von dem Bürstenrohr 4 definiert wird. Aus der neutralen Stellung gemäß Figur 7 kann der Borstenträger 2 in entgegengesetzte Richtungen rotatorisch oszillierend bewegt werden, und zwar in einem Winkelbereich von bis zu ± 45°, vorzugsweise etwa ± 35°.

Jedes der Borstenträgersegmente 9 besitzt Ausnehmungen 17 zur Aufnahme von entsprechenden Borstenbüscheln. In der gezeichneten Ausführung sind in jedem Borstenträgersegment 9 zwei Borstenbüschel mit länglichem Querschnitt angeordnet. Die Borstenbüschel sind insbesondere auch hier als Powertips ausgebildet, die in Borstenlängsrichtung die auf dem festen Borstenträger 8 angeordneten Borstenbüschel überragen und eine größere Steifigkeit besitzen. Sie dienen dazu, in die Zahnzwischenräume einzudringen.

Im Gegensatz zu der zuvor beschriebenen Ausführung können die Borstenträgersegmente 9 um eine sich radial erstreckende Achse 18 relativ zu dem starren Borstenträgersegment 8 geschwenkt werden. Die Radialachse 18 verläuft im wesentlichen in der Ebene des Borstenträgers 2 quer zu dessen Drehachse 6 und im wesentlichen durch die Segmente des Borstenträgers 2, in denen die beweglichen Borstenträgersegmente 9 vorgesehen sind. In der unausgelenkten Stellung des Borstenträgers 2 verläuft die Radialachse 18 in Längsrichtung des Bürstenkopfs 1. Wie die Figuren 4 und 5 zeigen, können die Borstenträgersegmente 9 um die Radialachse 18 derart gekippt werden, dass die von der Radialachse 18 beabstandeten Borstenbüschel eine Stocherbewegung ausführen. Insbesondere wedeln die auf den Borstenträgersegmenten 9 angeordneten Borstenbüschel in Umfangsrichtung etwa in einer zu dem Borstenträger 2 tangentialen Ebene. In der nicht ausgelenkten Stellung, die Figur 7 zeigt, liegen die beweglichen Borstenträgersegmente 9 im wesentlichen in der von dem starren Borstenträgersegment 8 definierten Ebene.

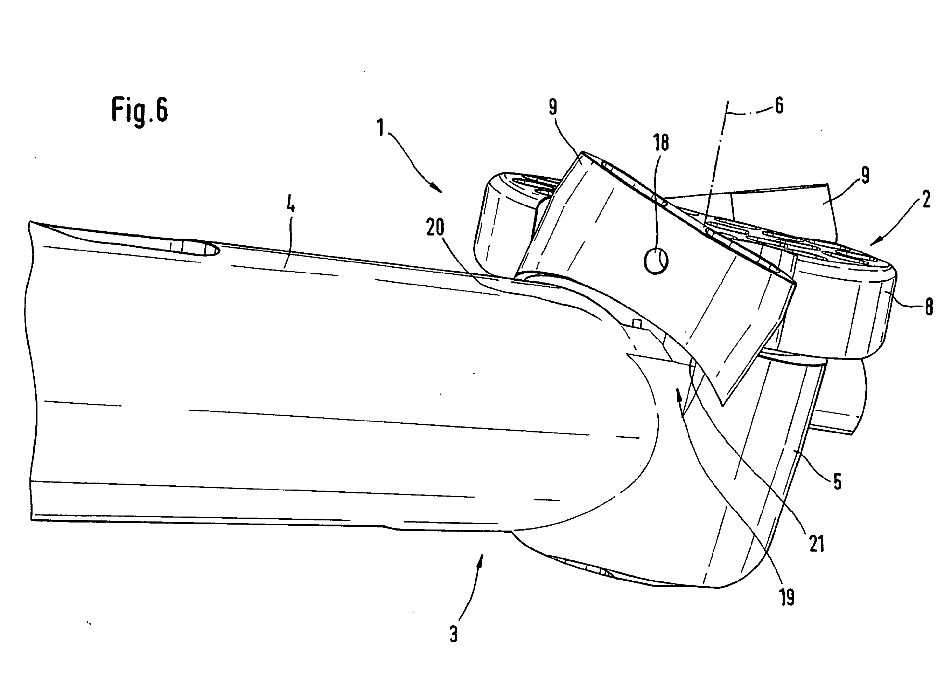

Die Bewegung der Borstenträgersegmente 9 ist in Abhängigkeit der Drehbewegung des Borstenträgers 2 um die Drehachse 6 zwangsgesteuert. Als Antriebsmittel ist eine Kurvensteuerung 19 vorgesehen, die bei einer Drehung des Borstenträgers 2 um seine Drehachse 6 ein Schwenken der Borstenträgersegmente 9 um die Radialachse 18 bewirkt. Wie die Figuren 4 und 6 zeigen, ist jedem der Borstenträgersegmente 9 eine Kurvensteuerfläche 20 zugeordnet, die bürstenkopfträgerfest im wesentlichen unter den Borstenträgersegmenten 9 liegt. Die dem näher am Handteil liegenden Borstenträgersegment 9 zugeordnete Kurvensteuerfläche 20 wird von der Oberfläche des Bürstenrohres 4 gebildet. Die dem gegenüberliegenden, stirnseitigen Borstenträgersegment 9 zugeordnete Kurvensteuerfläche 20 wird von einem stirnseitigen Vorsprung an dem Borstenträgeraufnahmeabschnitt 5 gebildet (vgl. Figur 4). Die beiden Kurvensteuerflächen 20 sind jeweils konvex gewölbt.

Die Borstenträgersegmente 9 besitzen an ihrer Unterseite, die dem Bürstenrohr 4 zugewandt ist, jeweils ein Eingriffselement 21, mit dem sie mit der jeweiligen Kurvensteuerfläche 20 in Eingriff stehen, insbesondere darauf abgleiten. Als Eingriffselement dient in der gezeichneten Ausführung unmittelbar die Unterseite der Borstenträgersegmente 9 selbst, die konvex gewölbt ist, und zwar derart, dass sie sich an die Kurvensteuerfläche anschmiegt (vgl. Figur 7). Zweckmäßigerweise erstreckt sich das Borstenträgersegment 9 in Umfangsrichtung des Borstenträgers 2 über eine größere Strecke als die Kurvensteuerfläche 20 (vgl. Figur 7). Die Kurvensteuerung 19 ist in der Ausführung gemäß Figuren 4 bis 7 derart gestaltet, dass in der neutralen Stellung des Borstenträgers 2, d.h. wenn dieser bezüglich seiner Oszillationsbewegungen in einer in Fig. 7 gezeigten mittleren Stellung ist, die Borstenträgersegmente 9 unausgelenkt sind. Die maximale Hubbewegung, d.h. die maximale Auslenkung der Borstenträgersegmente 9 um die Radialachse 18 erfolgt hingegen in der maximal verdrehten Stellung des Borstenträgers 2. Die beiden Borstenträgersegmente 9 werden dabei gegensinnig verdreht (vgl. Figur 4). Insofern als die beiden Borstenträgersegmente 9 jedoch auf beiden Seiten der Radialachse 18 Borstenbüschel tragen, erfolgt eine Borstenbüschelhubbewegung auf beiden Borstenträgersegmenten 9 im gleichen Takt, d.h. die Powertips auf gegenüberliegenden Seiten des Borstenträgers 2 werden gleichzeitig angehoben, um in die Zahnzwischenräume zu stochern.

## Patentansprüche

1. Bürstenkopf für eine Zahnbürste, die ein Handteil mit einem Antrieb für den Bürstenkopf aufweist, mit einem ein Borstenfeld (11) tragenden Borstenträger (2), der an einem Bürstenkopfträger (3) beweglich gelagert ist und Verbindungsmittel (7) zur Ankupplung an den handteilseitigen Antrieb der Zahnbürste aufweist, wobei der Borstenträger (2) in mehrere zueinander bewegliche Borstenträgersegmente (8; 9) unterteilt ist, sowie mit Antriebsmitteln (13; 19), die die Stellung der Borstenträgersegmente (8; 9) relativ zueinander in Abhängigkeit der Stellung des genannten Borstenträgers (2) verändern, **dadurch gekennzeichnet, dass** die Antriebsmittel (13; 19) eine Kurvensteuerfläche (14; 20) sowie ein damit zusammenwirkendes Eingriffselement (15; 21) aufweisen, die an dem Bürstenkopfträger (3) und zumindest einem Borstenträgersegment (9) vorgesehen sind, und dass der gesamte Borstenträger (2) um eine Drehachse (6) drehbar gelagert antreibbar ist, und die Kurvensteuerfläche (14; 20) auf einem Bogen um die Drehachse (6) herum angeordnet ist, insbesondere am Bürstenkopfträger (3) ausgebildet ist.

2. Bürstenkopf nach dem vorhergehenden Anspruch, wobei mehrere Borstenträgersegmente (9), vorzugsweise ein paar diametral gegenüberliegende Borstenträgersegmente (9), in Abhängigkeit der Drehstellung des Borstenträgers (2) antreibbar sind, wobei die Kurvensteuerfläche (14; 20) mehrere Abschnitte, aufweist, von denen jeweils ein Abschnitt einem der antreibbaren Borstenträgersegmente (9) zugeordnet ist.

3. Bürstenkopf nach einem der vorhergehenden Ansprüche, wobei die Antriebsmittel (19) als Zwangssteuerung ausgebildet sind, derart, dass die Kurvensteuerfläche (20) und das damit zusammenwirkende Eingriffselement (21) stets in Eingriff stehen und in entgegengesetzten Bewegungsrichtungen wirksam sind.

4. Bürstenkopf nach einem der vorhergehenden Ansprüche 1 bis 3, wobei die Kurvensteuerfläche (14) und das damit zusammenwirkenden Eingriffselement (15) voneinander abhebbar sind und von Zahnputz-Reaktionskräften in Eingriff gehalten werden.

5. Bürstenkopf nach einem der vorhergehenden Ansprüche, wobei die Antriebsmittel (13; 19) derart ausgebildet und die von den Antriebsmitteln antreibbaren Borstenträgersegmente (9) derart gelagert sind, dass bei Drehung des Borstenträgers (2) um seine Drehachse (6) zumindest ein Teil der genannten Borstenträgersegmente (9) eine Stocherbewegung in Richtung der Drehachse (6) ausführt.

6. Bürstenkopf nach einem der vorhergehenden Ansprüche, wobei der Borstenträger (2) eine neutrale Stellung aufweist, aus der heraus er oszillierend in entgegengesetzte Richtungen antreibbar ist, und die Kurvensteuerfläche (14) derart ausgebildet ist, dass das jeweilige von der Kurvensteuerfläche angetriebene Borstenträgersegment (9) eine maximale Hubstellung in der neutralen Stellung des Borstenträgers (2) und eine minimale Hubstellung bei maximaler Auslenkung des Borstenträgers (2) aus dessen neutraler Stellung einnimmt.

7. Bürstenkopf nach einem der vorhergehenden Ansprüche 1 bis 6, wobei der Borstenträger (2) eine neutrale Stellung aufweist, aus der heraus er oszillierend in entgegengesetzte Richtungen antreibbar ist, und die Kurvensteuerfläche (20) derart ausgebildet ist, dass das jeweilige von der Kurvensteuerfläche angetriebene Borstenträgersegment (9) eine minimale Hubstellung in der neutralen Stellung des Borstenträgers (2) und eine maximale Hubstellung bei maximaler Auslenkung des Borstenträgers (2) aus dessen neutraler Stellung einnimmt

8. Bürstenkopf nach einem der vorhergehenden Ansprüche, wobei mehrere Borstenträgersegmente (9) von entsprechenden Kurvensteuerflächen (14; 20) im gleichen Takt angehoben werden.

9. Bürstenkopf nach einem der vorhergehenden Ansprüche, wobei der Borstenträger (2) um eine insbesondere etwa quer zu seiner Drehachse (6) verlaufende Schwenkachse (10; 18) schwenkbar gelagerte Borstenträgersegmente (9) aufweist.

10. Zahnbürste mit einem motorischen Antrieb und einem Bürstenkopf (1) nach einem der vorhergehenden Ansprüche.

## Claims

1. A brush head for a toothbrush having a hand piece with a drive for the brush head, comprising a bristle holder (2) carrying a bristle field (11) and being movably mounted on a brush head holder (3) and comprising connecting means (7) for coupling same to the drive of the toothbrush provided in the hand piece, wherein the bristle holder (2) is divided into a plurality of bristle holder segments (8, 9) which are movable with respect to each other, and comprising drive means (13, 19) which change the position of the bristle holder segments (8, 9) relative to each other according to the position of said bristle holder (2), **characterized in that** the drive means (13, 19) have a cam control surface (14, 20) and an engagement element (15, 21) cooperating with same provided on the brush head holder (3) and on at least one of the bristle holder segments (9), and **in that** the entire bristle holder (2) is mounted so as to be driven about a rotational axis (6), and the cam control surface (14, 20) is arranged on an arc around the rotational axis (6), formed in particular on the brush head holder (3).

2. The brush head according to the preceding claim, wherein a plurality of bristle holder segments (9), preferably a pair of diametrically opposite bristle holder segments (9) are driven according to the rotational position of the bristle holder (2), wherein the cam control surface (14, 20) has a plurality of sections, one of which is assigned in each case to one of the driven bristle holder segments (9).

3. The brush head according to any one of the preceding claims, wherein the drive means (19) are designed as a positive control means, such that the cam control surface (20) and the engagement element (21) cooperating with same are always in engagement with one another and are operative in opposite directions of movement.

4. The brush head according to any one of the preceding Claims 1 through 3, wherein the cam control surface (14) and the engagement element (15) cooperating with same can be lifted off from each other and are kept in engagement by the tooth-cleaning reaction forces.

5. The brush head according to any one of the preceding claims, wherein the drive means (13, 19) are designed in such a way and the bristle holder segments (9) driven by the drive means are mounted in such a way that when the bristle holder (2) rotates about its axis of rotation (6), at least some of said bristle holder segments (9) perform a poking action in the direction of the axis of rotation (6).

6. The brush head according to any one of the preceding claims, wherein the bristle holder (2) has a neutral position from which it is driven in oscillation in opposite directions, and the cam control surface (14) is designed such that the bristle holder segment (9) that is driven by the cam control surface in each case occupies a maximum lift position in the neutral position of the bristle holder (2) and a minimum lift position at the maximum deflection of the bristle holder (2) from its neutral position.

7. The brush head according to any one of the preceding Claims 1 through 6, wherein the bristle holder (2) has a neutral position from which it is driven in oscillation in opposite directions and the cam control surface (20) is designed such that the bristle holder segment (9) that is driven by the cam control surface in each case occupies a minimum lift position in the neutral position of the bristle holder (2) and a maximum lift position at the maximum deflection of the bristle holder (2) from its neutral position.

8. The brush head according to any one of the preceding claims wherein a plurality of bristle holder segments (9) are raised in the same stroke sequence by corresponding cam control surfaces (14, 20).

9. The brush head according to any one of the preceding claims wherein the bristle holder (2) has bristle holder segments (9) which are pivot mounted about a pivot axis (10, 18) which extends in particular approximately transversely to its axis of rotation (6).

10. A toothbrush having a motor drive and a brush head (1) according to any one of the preceding claims.

## Revendications

1. Tête de brosse pour une brosse à dents ayant une pièce à main avec un entraînement pour la tête de brosse, comprenant un support de poils (2) portant une zone de poils (11), lequel est monté de manière mobile sur un support de tête de brosse (3) et comprenant des moyens de connexion (7) pour un accouplement à l'entraînement de la brosse à dents se trouvant dans la pièce à main, le support de poils (2) étant divisé en une pluralité de segments de support de poils (8, 9) qui sont mobiles les uns par rapport aux autres, et comprenant des moyens d'entraînement (13, 19) qui changent la position des segments de support de poils (8, 9) les uns par rapport aux autres selon la position dudit support de poils (2), **caractérisée en ce que** les moyens d'entraînement (13, 19) présentent une surface de commande à came (14, 20) ainsi qu'un élément de prise (15, 21) qui interagit avec celle-ci, lesquels sont prévus sur le support de tête de brosse (3) et sur au moins un segment de support de poils (9), et **en ce que** le support de poils (2) entier est monté de manière à pouvoir être entraîné en rotation autour d'un axe de rotation (6) et la surface de commande à came (14, 20) est disposée sur un arc autour de l'axe de rotation (6), notamment formée sur le support de tête de brosse (3).

2. Tête de brosse selon la revendication précédente, une pluralité de segments de support de poils (9), de préférence une paire de segments de support de poils (9) diamétralement opposés pouvant être entraînés en fonction de la position de rotation du support de poils (2), la surface de commande à came (14, 20) présentant une pluralité de sections, dont une est à chaque fois affectée à l'un des segments de support de poils (9) à entraînement.

3. Tête de brosse selon l'une des revendications précédentes, les moyens d'entraînement (19) étant réalisés sous la forme d'une commande forcée de telle sorte que la surface de commande à came (20) et l'élément de prise (21) qui interagit avec celle-ci sont toujours en prise et agissent dans des sens de mouvement opposés.

4. Tête de brosse selon l'une des revendications précédentes 1 à 3, la surface de commande à came (14) et l'élément de prise (15) qui interagit avec celle-ci pouvant être séparés l'un de l'autre et étant maintenus en prise par les forces de réaction du brossage des dents.

5. Tête de brosse selon l'une des revendications précédentes, les moyens d'entraînement (13, 19) étant conçus et les segments de support de poils (9) pouvant être entraînés par les moyens d'entraînement étant montés de telle sort que lorsque le support de poils (2) tourne autour de son axe de rotation (6), au moins une partie desdits segments de support de poils (9) exécute un mouvement de curage dans la direction de l'axe de rotation (6).

6. Tête de brosse selon l'une des revendications précédentes, le support de poils (2) présentant une position neutre à partir de laquelle il peut être entraîné en oscillation dans des directions opposées et la surface de commande à came (14) étant configurée de telle sorte que le segment de support de poils (9) respectif qui est entraîné par la surface de commande à came occupe une position de levage maximale dans la position neutre du support de poils (2) et une position de levage minimale à la déflexion maximale du support de poils (2) par rapport à sa position neutre.

7. Tête de brosse selon l'une des revendications précédentes 1 à 6, le support de poils (2) présentant une position neutre à partir de laquelle il peut être entraîné en oscillation dans des directions opposées et la surface de commande à came (20) étant configurée de telle sorte que le segment de support de poils (9) respectif qui est entraîné par la surface de commande à came occupe une position de levage minimale dans la position neutre du support de poils (2) et une position de levage maximale à la déflexion maximale du support de poils (2) par rapport à sa position neutre.

8. Tête de brosse selon l'une des revendications précédentes, une pluralité de segments de support de poils (9) étant relevés à la même cadence par les surfaces de commande à came (14, 20) correspondantes.

9. Tête de brosse selon l'une des revendications précédentes, le support de poils (2) présentant des segments de support de poils (9) qui sont montés de manière pivotante autour d'un axe de pivotement (10, 18) qui s'étend en particulier à peu près transversalement par rapport à son axe de rotation (6).

10. Brosse à dents munie d'un entraînement motorisé et d'une tête de brosse (1) selon l'une des revendications précédentes.
